# EUROPEAN PATENT APPLICATION

(11) **EP 4 621 220 A1**
(43) Date of publication of application: **24.09.2025**
(21) Application number: 24305410.3
(22) Date of filing: 19.03.2024
(51) Int. Cl.: F03D 13/20, F03D 13/25

(54) **TRANSITION PIECE HAVING A HOLLOW STRUCTURE INTENDED TO SUPPORT A WIND TURBINE AND COMPRISING ULTRA-HIGH PERFORMANCE FIBER-REINFORCED CONCRETE**

(71) Applicant: TotalEnergies OneTech, 92400 Courbevoie (FR)
(72) Inventor: COLLET, Pascal, 92400 COURBEVOIE (FR); BOUNHOURE, François, 92400 COURBEVOIE (FR); LEBRUN, François, 75583 PARIS CEDEX 12 (FR); TOURLET, Hervé, 75583 PARIS CEDEX 12 (FR)
(74) Representative: Lavoix

(57) **Abstract**

Transition piece (16) comprising a hollow structure (32), and pretension members (36) within the structure. The structure defines an interior volume (34) and has a top part (40) for supporting a wind turbine. The structure comprises ultra-high performance fiber-reinforced concrete and forming feet (42, 44, 46) forming supports intended to rest on a jacket. The feet comprise an upper wall (54), the structure having side walls (56) extending between the top part and a base (58) defining the supports. The side walls extend between the upper wall of two successive feet, each of the feet having two lateral walls in a horizontal transverse direction respectively formed by two successive side walls. The interior volume is delimited by the top part, the upper wall of each of the feet, the side walls and the base.

## Description

### FIELD

The present disclosure deals with a transition piece comprising a structure having a top part intended to support a wind turbine extending along a vertical axis, the structure being intended to rest on a jacket substructure.

The invention also deals with an assembly comprising a wind turbine, a jacket substructure and such a transition piece.

### BACKGROUND

Such transition pieces have to withstand huge static efforts, and dynamic efforts due to wind, as well as bending moments. They are generally made of thick steel sheets or parts, the supply of which may be long and expensive, to the point of having to delay offshore wind projects.

Manufacturing such transition pieces is also complex and expensive, as huge thick sheets or parts have to be welded together.

Besides, due to corrosion and fatigue, such transition pieces require heavy maintenance, including regular inspections and painting campaigns.

Using reinforced concrete to manufacture such a piece is however not a desirable option, as it would result in a structure with extremely thick walls and a prohibitive weight, in the sense that it would be more difficult to lift and the jacket substructure would have to be oversized in order to withstand the overweight of the transition piece. The result would be a cost increase.

An aim of the invention is to overcome or reduce the above mentioned issues, by providing a resistant transition between a wind turbine and a substructure, that allows reducing costs and/or speeds the manufacturing process.

### SUMMARY OF THE INVENTION

To this end, the invention proposes a transition piece comprising a hollow structure, and a plurality of pretension members at least partly extending within the hollow structure, the hollow structure defining an interior volume and having a top part intended to support a wind turbine extending along a vertical axis, the hollow structure comprising ultra-high performance fiber-reinforced concrete and forming N feet distributed about the vertical axis, N being greater than or equal to three,
the feet respectively having distal parts with respect to the vertical axis, the distal parts respectively forming supports intended to rest on a jacket substructure, each of the feet comprising an upper wall extending between the top part and one of the supports,
the hollow structure comprising N side walls distributed about the vertical axis, the side walls extending along the vertical axis between the top part and a base of the hollow structure defining the supports, the side walls extending between the upper wall of two successive feet around the vertical axis, each of the feet having two lateral walls in a horizontal transverse direction orthogonal to the vertical axis, the two lateral walls being respectively formed by two successive walls of the side wall,
the interior volume being delimited by the top part, the upper wall of each of the feet, the side walls and the base.

In other embodiments, the transition piece may comprise one or several of the following features, taken in isolation or any technically feasible combination:
- the upper wall of each of the feet has a generally convex shape seen from outside of the interior volume; and /or the side walls have a generally concave shape;
- the top part is circular around the vertical axis, the side walls being parallel to the vertical axis, each of the side walls having a median portion vertically aligned with the top part;
- the transition piece comprises a plurality of reinforcing elements comprising ultra-high performance fiber-reinforced concrete and extending through the interior volume in each of the feet, each of the reinforcing elements connecting two successive walls of the side walls around the vertical axis;
- the reinforcing elements extend along one or several horizontal circle(s) around the vertical axis;
- the reinforcing elements are successive along the vertical axis in each of the feet, the reinforcing elements and the side walls defining inner openings in radial directions with respect to the vertical axis ;
- the reinforcing elements are aligned with the top part along the vertical axis;
- the base extends perpendicularly to the vertical axis;
- the base has an outer perimeter defined by the side walls and the upper wall of each of the feet;
- the supports are located under a lower extremity of the upper wall of each of the feet;
- the hollow structure, except potential openings in the side walls or in the base, has a symmetry of order N around the vertical axis;
- the hollow structure comprises prefabricated parts assembled together, and including: an upper part surrounding the vertical axis and forming the top part, and N lower parts structurally analogous to each other and forming the distal parts of the feet and at least part of the base, the lower parts being fixed to each other successively around the vertical axis, and fixed to the upper part;
- at least one of the side walls defines an opening allowing to enter the interior volume from outside the transition piece;
- the hollow structure comprises at least one pillar at least partly formed by at least one of the side walls, the pillar extending between the top part and the base and being located in between two of the feet around the vertical axis; and
- the pretension members comprises a plurality of cables extending within the hollow structure: in the base, between the upper wall of one of the feet and one of the side walls; in the upper wall of each of the feet, between the base and the top part; and/or in the side walls, between the upper wall of each of the feet, or the top part, and the base.

The invention also proposes an assembly comprising a wind turbine, a jacket substructure and a transition piece according as described above, the top part supporting the wind turbine, and the supports resting on the jacket substructure.

### BRIEF DESCRIPTION OF THE DRAWINGS

The disclosure and its advantages will be better understood upon reading the following description, given solely by way of example and with reference to the appended drawings, in which:
- Figure 1 is a perspective partial view of an assembly according to the invention and seen from below at an angle,
- Figure 2 is a perspective view a transition piece represented in Figure 1 and seen from above at an angle, showing pretension members,
- Figure 3 is a perspective view of an upper part of the transition piece shown in Figures 1 and 2, and
- Figure 4 is a perspective view of one of three lower parts shown in Figures 1 and 2 and forming feet of the transition piece.

### DETAILED DESCRIPTION

### Assembly

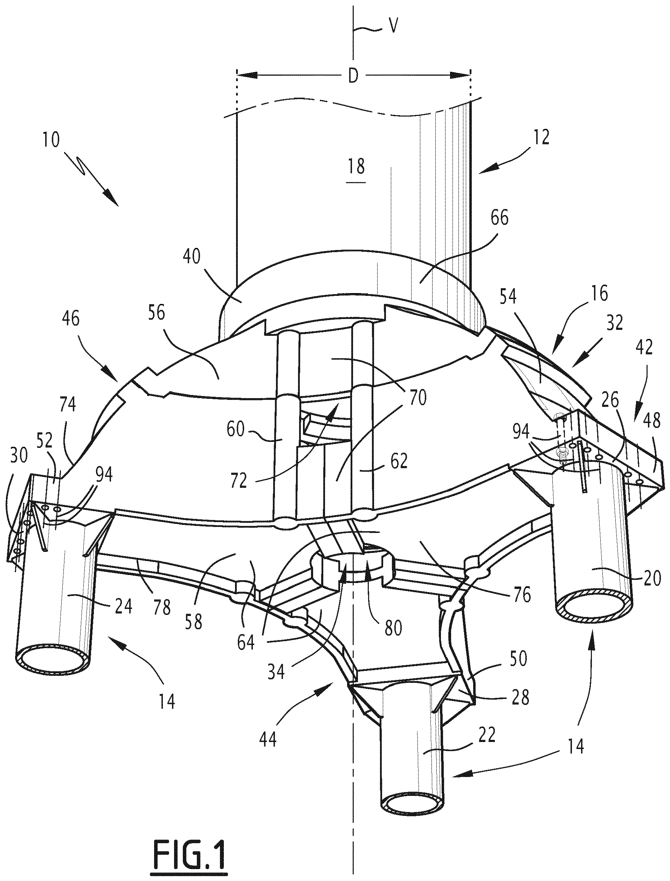

With reference to Figures 1, an assembly 10 according to the invention will be described.

The assembly 10 is typically located offshore.

The assembly 10 comprises a wind turbine 12, a jacket substructure 14, and a transition piece 16 located between the wind turbine and the jacket substructure.

The wind turbine 12 and the substructure 14 are known in themselves and are only partially represented.

The wind turbine 12 extends along a vertical axis V. The wind turbine 12 is adapted for producing electrical power, for example with an output between 5.0 and 20.0 MW.

The wind turbine 12 comprises a mast 18 fixed to the transition piece 16.

The mast 18 defines an outer diameter D, for example comprised between 5.0 and 10.0 meters where the mast connects with the transition piece 16.

The substructure 14 comprises steel tubes 20, 22, 24, of which N tubes, three in the example, are partially shown in Figure 1. These N tubes have upper extremities 26, 28, 30 forming the only significant supports on which the transition piece 16 is adapted for resting.

N is an integer greater than or equal to 3, which is a preferred value for N.

In a particular embodiment, (not shown), N is equal to 4.

The substructure 14 is adapted for lying on a seabed (not shown), the upper extremities 26, 28, 30 emerging from a body of water (not shown), for example an ocean, a sea or a lake.

### Transition piece

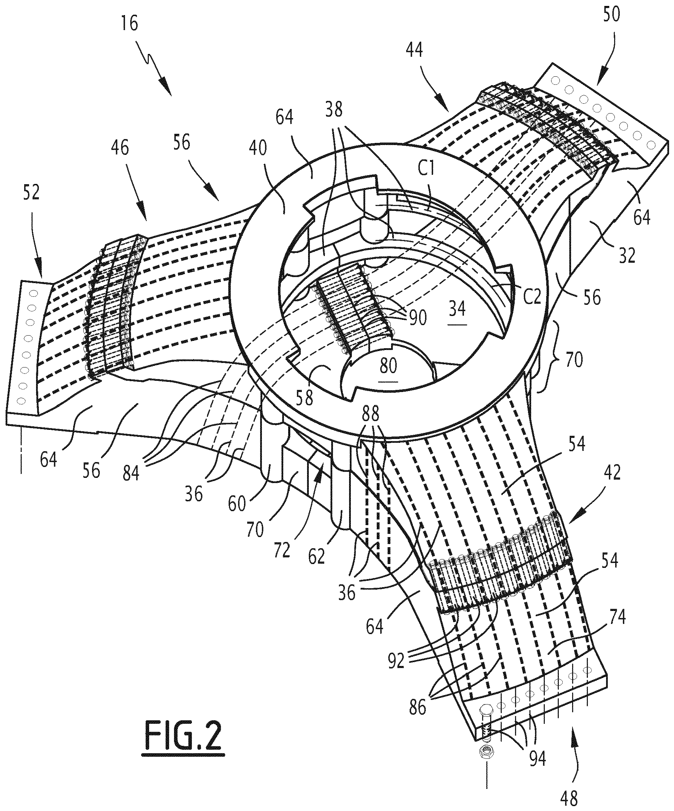

As shown in Figure 2, the transition piece 16 comprises a hollow structure 32 defining an interior volume 34, and a plurality of pretension members 36 at least partly extending within the hollow structure 32.

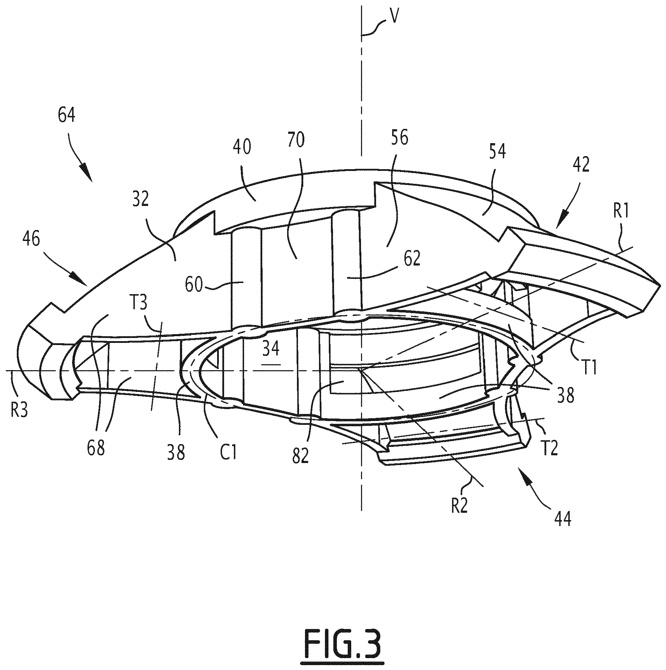

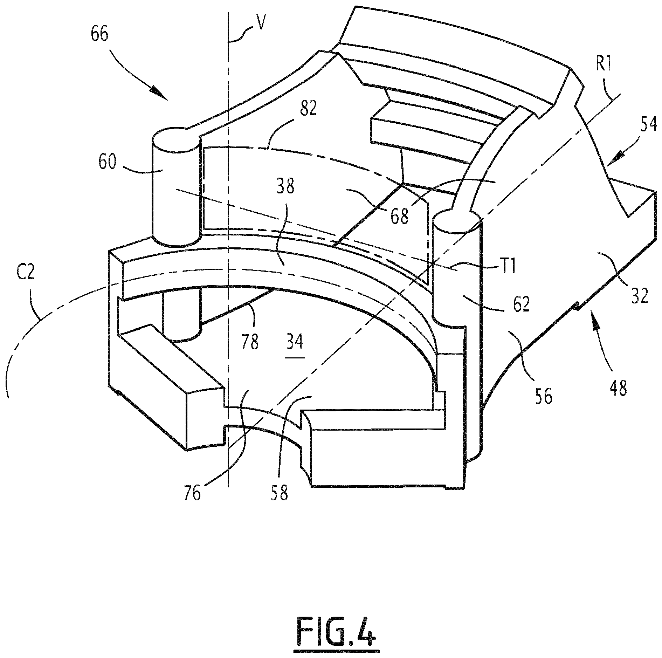

In the example, the transition piece 16 also comprises a plurality of reinforcing elements 38 (also visible in Figures 3 and 4) extending through the interior volume 34.

As a variant (not shown), there are no reinforcing elements 38 extending through the interior volume 34.

### Hollow structure

The hollow structure 32 advantageously allows installing equipment (not shown) in the interior volume 34, such that the transition piece 16 can serve as a control room and/or a warehouse. The interior volume 34 advantageously provides access within the transition piece 16 to one or several operators (not shown), for example to perform maintenance of the assembly 10.

In particular embodiments, the equipment may comprise:
- a transformer (not shown) intended to receive power from the wind turbine 12 and/or from another source (not shown), and/or
- a switch gear (not shown).

The hollow structure 32 has a top part 40 (Figures 1 to 3) supporting the wind turbine 12 and forms N feet 42, 44, 46 distributed about the vertical axis V, the feet respectively having distal parts 48, 50, 52 with respect to the vertical axis V, the distal parts respectively forming supports intended to rest on the jacket substructure 14, each of the feet 42, 44, 46 comprising an upper wall 54 extending between the top part 40 and one of the supports.

The hollow structure 32 comprises N side walls 56 distributed about the vertical axis V, the side walls extending along the vertical axis V between the top part 40 and a base 58 of the hollow structure 32 defining the supports, the side walls 56 extending between the upper wall 54 of two successive feet around the vertical axis V.

In the example, the hollow structure 32 comprises two pillars 60, 62 at least partly formed by each of the side walls 56, the two pillars extending between the top part 40 and the base 58 and being located in between two of the feet 42, 44, 46 around the vertical axis V.

As variants (not shown), there is only one pillar at least partly formed by each of the side walls 56.

The hollow structure 32 comprises ultra-high performance fiber-reinforced concrete, also known as UHPFRC. For example, UHPFRC represents at least 90% of the weight of the hollow structure 32.

The hollow structure 32, except potential openings in the side walls 56 or in the base 58, advantageously has a symmetry of order N around the vertical axis V.

The interior volume 34 of the hollow structure 32 is delimited by the top part 40, the upper wall 54 of each of the feet 42, 44, 46, the side walls 56 and the base 58.

As a variant (not shown), the hollow structure 32 may include internal walls (not shown) dividing the interior volume 34.

### Prefabrication

The hollow structure 32 advantageously comprises, or is made of, prefabricated parts assembled together.

As a variant (not shown), the hollow structure 32 is a mono-block (single piece).

For example, the prefabricated parts includes an upper part 64 (figure 3) surrounding the vertical axis V and forming the top part 40, and for example N lower parts 66 (figure 4) forming the distal parts 48, 50, 52 of the feet 42, 44, 46 and at least part of the base 58.

As a variant (not shown), the prefabricated parts includes more than N+1 parts. For example, each of the lower parts 66 is made of two subparts, for example symmetrical to each other with respect to a plane.

Advantageously, the lower parts 66 are structurally analogous to each other, which facilitates their manufacturing in series.

The lower parts 66 are fixed to each other successively around the vertical axis V, and fixed to the upper part 64.

### Ultra-high performance fiber-reinforced concrete (UHPFRC)

Ultra-high performance concrete (UHPFRC) is known *per se.*

UHPFRC is a cementitious composite material comprising granular constituents, with a low water-to-cementitious materials weight ratio, for example less than 0.25, and a discontinuous internal fiber reinforcement. Fibers for example comprise steel and/or polypropylene.

UHPFRC has a compressive strength greater than 90 MPa, preferably greater than 120 MPa, and more preferably greater than 150 MPa, as defined by standard NF P 18-470 of 2016.

UHPFRC and its utilization are also described in standards NF P 18-710 of 2016 and NF P 18451 of 2018.

Advantageously, UHPFRC has a post cracking tensile strength, as defined by standard NF P 18-470 of 2016, greater than 5.0 MPa, preferably greater than 7.0 MPa, providing ductile behavior.

Advantageously, the UHPFRC used in the hollow structure 32 is devoid of any classical steel reinforcement found in regular reinforced concrete (no plurality of steel bars welded together).

### Elements of the hollow structure

The top part 40 is for example circular around the vertical axis V.

Each of the feet 42, 44, 46 has two lateral walls 68 in a horizontal transverse direction T1, T2, T3 orthogonal to the vertical axis V, the two lateral walls being respectively formed by two successive walls of the side walls 56.

In the example, each of the feet 42, 44, 46 is formed by the upper part 64 and one of the N lower parts 66.

The upper wall 54 of each of the feet 42, 44, 46 for example has a generally convex shape seen from outside of the interior volume 34.

As a variant (not shown), the upper wall 54 has a flat shape.

For example, the side walls 56 have a generally concave shape seen from outside of the interior volume. The side walls 56 are for example parallel to the vertical axis V.

As a variant (not shown), the side walls 56 have a flat shape, or a convex shape.

Each of the side walls 56 for example has a median portion 70 vertically aligned with the top part 40. Advantageously, at least one of the side walls 56 defines an opening 72 (figures 1 and 2) allowing to enter the interior volume 34 from outside the transition piece 16.

For example, the median portion 70 extends between two of the feet 42, 44, 46. For example, the opening 72 defined by the median portion 70.

Advantageously, the supports are located under a lower extremity 74 of the upper wall 54 of each of the feet.

The base 58 for example extends perpendicularly to the vertical axis V. In the example, the base 58 is flat.

As a variant (not shown), the base 58 is flat in a central region 76 (close to the vertical axis V, and inclined downwards toward the distal part 48, 50, 52 of each of the feet.

The base 58 has an outer perimeter 78 for example defined by the side walls 56 and the upper wall 54 of each of the feet 42, 44, 46.

In the example, the base 58 defines a central opening 80.

### Reinforcing elements

The reinforcing elements 38 for example comprises ultra-high performance fiber-reinforced concrete.

The reinforcing elements 38 extend through the interior volume 34 in each of the feet 42, 44, 46.

Each of the reinforcing elements 38 connects two successive walls of the side walls 56 around the vertical axis V, for example the two lateral walls 58 of one of the feet.

Advantageously, the reinforcing elements 38 extend along several horizontal circles C1, C2, two in the example, around the vertical axis V.

The reinforcing elements 38 are for example successive along the vertical axis V in each of the feet 42, 44, 46. The reinforcing elements and the side walls 56 define inner openings 82 in radial directions R1, R2, R3 with respect to the vertical axis V.

The reinforcing elements 38 are for example aligned with the top part 40 along the vertical axis V.

The reinforcing elements 38 should not be confused with reinforcement used within regular reinforced concrete. The present reinforcing elements 38 extend through the interior volume 34 and act as buttresses between the side walls 56.

### Pretension elements

The pretension members 36 (Figure 2) comprises a plurality of pretension cables 84, 86, 88 extending within the hollow structure 32.

The pretension cables extend within the thickness of the hollow structure 32. However, some extremities or parts of the pretension cables may be outside of the material of the hollow structure 32.

Advantageously, the pretension cables 84, 86, 88 also have altogether a symmetry of order N around the vertical axis V.

For example, the pretension cables 84 extend in the base 58, between the upper wall 54 of one of the feet 42, 44, 46 and one of the side walls 56 opposed to said foot.

For example, the pretension cables 86 extend in the upper wall 54 of each of the feet, between the base 48 and the top part 40. In the example, each of the pretension cables 86 extends in the upper part 64 and one of the lower parts 66.

For example, the pretension cables 88 extend in the side walls 56, between the upper wall 54 of each of the feet, or the top part 40, and the base 58.

As a variant (not shown), some the pretension cables 84, 86, 88 may be replaced with tensioning bars, or supplemented with tensioning bars.

In the example, the prefabricated parts 64, 66 are assembled using a plurality of tensioning bars 90, 92.

For example, the tensioning bars 90 are used to connect two lower parts 66 together that are successive around the vertical axis V, and the tensioning bars 92 are used to connect each of the lower parts 66 to the upper part 64.

### Assembly erection

In the example, the prefabricated parts 64, 66 are produced, advantageously in series.

The prefabricated parts 64, 66 are assembled in order to form the transition piece 16, which is brought on-site.

The transition piece 16 is lifted and placed on the jacket substructure 14, the supports resting on the upper extremities 26, 28, 30 of the tubes 20, 22, 24.

In a particular embodiment, the transition piece 16 is fixed to the upper extremities 26, 28, 30, for example using bolts 94 (of which a few are shown in Figure 1).

Then the wind turbine 12 is fixed to the top part 40 of the transition piece 16.

### Advantages

Thanks to the above described features, the transition piece 16 is resistant and light, for example with approximately the same mass as a steel transition piece. The transition piece 16 does not require a different lift crane. This allows reducing costs and overall CO2 emissions compared with a steel or normal concrete transition piece, and can speed the manufacturing process, as concrete is usually more easily obtained.

Costly inspections are avoided or reduced, and painting campaigns are avoided.

Besides, the hollow structure 32 advantageously comprising prefabricated parts 64, 66 assembled together, its manufacturing is easy. In case the lower parts 66 are analogous to each other, the lower parts 66 and the upper parts 64 may be mass produced.

The hollow structure 32 according to the invention allows reducing weight compared with regular concrete, and its manufacturing is more easily industrialized.

UHPFRC may be sourced locally, or easily delivered in big bags by road, rail or boat.

The size of the yard (site required to build the transition piece 16) is reduced thanks to little or no passive reinforcement (huge quantities of steel reinforcement in regular concrete).

### Examples

In a first example, the wind turbine 12 produces 17 MW of rated power. The transition piece 16 is a mono-block with three feet 42, 44, 46, and its mass is approximately 670 tonnes.

In a second example, the wind turbine 12 produces 20 MW. The transition piece 16 comprises four prefabricated parts 64, 66 forming the top part 40 and the three feet 42, 44, 46, and its mass is 810 tonnes.

## Claims

1. A transition piece (16) comprising a hollow structure (32), and a plurality of pretension members (36) at least partly extending within the hollow structure (32),
the hollow structure (32) defining an interior volume (34) and having a top part (40) intended to support a wind turbine (12) extending along a vertical axis (V), the hollow structure (32) comprising ultra-high performance fiber-reinforced concrete and forming N feet (42, 44, 46) distributed about the vertical axis (V), N being greater than or equal to three,
the feet (42, 44, 46) respectively having distal parts (48, 50, 52) with respect to the vertical axis (V), the distal parts (48, 50, 52) respectively forming supports intended to rest on a jacket substructure (14), each of the feet (42, 44, 46) comprising an upper wall (54) extending between the top part (40) and one of the supports,
the hollow structure (32) comprising N side walls (56) distributed about the vertical axis (V), the side walls (56) extending along the vertical axis (V) between the top part (40) and a base (58) of the hollow structure (32) defining the supports, the side walls (56) extending between the upper wall (54) of two successive feet (42, 44, 46) around the vertical axis (V), each of the feet (42, 44, 46) having two lateral walls (68) in a horizontal transverse direction (T1, T2, T3) orthogonal to the vertical axis (V), the two lateral walls (68) being respectively formed by two successive walls of the side walls (56),
the interior volume (34) being delimited by the top part (40), the upper wall (54) of each of the feet (42, 44, 46), the side walls (56) and the base (58).

2. The transition piece (16) according to claim 1, wherein:
- the upper wall (54) of each of the feet (42, 44, 46) has a generally convex shape seen from outside of the interior volume (34), and /or
- the side walls (56) have a generally concave shape.

3. The transition piece (16) according to claim 1 or 2, wherein the top part (40) is circular around the vertical axis (V), the side walls (56) being parallel to the vertical axis (V), each of the side walls (56) having a median portion (70) vertically aligned with the top part (40).

4. The transition piece (16) according to any one of claims 1 to 3, comprising a plurality of reinforcing elements (38) comprising ultra-high performance fiber-reinforced concrete and extending through the interior volume (34) in each of the feet (42, 44, 46), each of the reinforcing elements (38) connecting two successive walls of the side walls (56) around the vertical axis (V).

5. The transition piece (16) according to claim 4, wherein the reinforcing elements (38) extend along one or several horizontal circle(s) (C1, C2) around the vertical axis (V).

6. The transition piece (16) according to claim 4 or 5, wherein the reinforcing elements (38) are successive along the vertical axis (V) in each of the feet (42, 44, 46), the reinforcing elements (38) and the side walls (56) defining inner openings (82) in radial directions (R1, R2, R3) with respect to the vertical axis (V).

7. The transition piece (16) according to any one of claims 4 to 6, wherein the reinforcing elements (38) are aligned with the top part (40) along the vertical axis (V).

8. The transition piece (16) according to any one of claims 1 to 7, wherein the base (58) extends perpendicularly to the vertical axis (V).

9. The transition piece (16) according to any one of claims 1 to 8, wherein the base (58) has an outer perimeter (78) defined by the side walls (56) and the upper wall (54) of each of the feet (42, 44, 46).

10. The transition piece (16) according to any one of claims 1 to 9, wherein the supports are located under a lower extremity (74) of the upper wall (54) of each of the feet (42, 44, 46).

11. The transition piece (16) according to any one of claims 1 to 10, wherein the hollow structure (32), except potential openings (72) in the side walls (56) or in the base (58), has a symmetry of order N around the vertical axis (V).

12. The transition piece (16) according to any one of claims 1 to 11, wherein the hollow structure (32) comprises prefabricated parts (64, 66) assembled together, and including:
- an upper part (64) surrounding the vertical axis (V) and forming the top part (40), and
- N lower parts (66) structurally analogous to each other and forming the distal parts (48, 50, 52) of the feet (42, 44, 46) and at least part of the base (58), the lower parts (66) being fixed to each other successively around the vertical axis (V), and fixed to the upper part (64).

13. The transition piece (16) according to any one of claims 1 to 12, wherein at least one of the side walls (56) defines an opening (72) allowing to enter the interior volume (34) from outside the transition piece (16).

14. The transition piece (16) according to any one of claims 1 to 13, wherein the hollow structure (32) comprises at least one pillar (60) at least partly formed by at least one of the side walls (56), the pillar (60) extending between the top part (40) and the base (58) and being located in between two of the feet (42, 44, 46) around the vertical axis (V).

15. The transition piece (16) according to any one of claims 1 to 14, wherein the pretension members (36) comprises a plurality of cables (84, 86, 88) extending within the hollow structure (32):
- in the base (58), between the upper wall (54) of one of the feet (42, 44, 46) and one of the side walls (56),
- in the upper wall (54) of each of the feet (42, 44, 46), between the base (58) and the top part (40), and/or
- in the side walls (56), between the upper wall (54) of each of the feet (42, 44, 46), or the top part (40), and the base (58).

16. An assembly (10) comprising a wind turbine (12), a jacket substructure (14) and a transition piece (16) according to any one of claims 1 to 15, the top part (40) supporting the wind turbine (12), and the supports resting on the jacket substructure (14).
